Europäisches Patentamt

(19) European Patent Office

Office européen des brevets

(11) Veröffentlichungsnummer: **0 266 627**
**B1**

(12) **EUROPÄISCHE PATENTSCHRIFT**

(45) Veröffentlichungstag der Patentschrift: **30.01.91**

(51) Int. Cl.⁵: **B 65 G 45/00**

(21) Anmeldenummer: **87115371.4**

(22) Anmeldetag: **21.10.87**

(54) **Waschanlage zum Reinigen eines endlosen Förderbandes.**

(30) Priorität: **03.11.86 DE 3637340**

(43) Veröffentlichungstag der Anmeldung:
**11.05.88 Patentblatt 88/19**

(45) Bekanntmachung des Hinweises auf die
Patenterteilung:
**30.01.91 Patentblatt 91/05**

(84) Benannte Vertragsstaaten:
**BE DE GB IT NL**

(56) Entgegenhaltungen:
**DE-A-2 337 394**
**DE-A-2 835 472**
**DE-A-2 950 346**
**DE-B-2 245 538**
**DE-B-2 525 267**
**DE-C-2 435 924**
**GB-A-2 082 133**

(73) Patentinhaber: **B.A.T. Cigaretten-Fabriken**
**GmbH**
**Alsterufer 4**
**D-2000 Hamburg 36 (DE)**

(72) Erfinder: **Knaul, Per, Dipl.-Ing.**
**Lönsweg 11**
**D-8585 Speichersdorf (DE)**
Erfinder: **Schelhorn, Fritz**
**Markgrafenallee 23b**
**D-8580 Bayreuth (DE)**
Erfinder: **Witte, Roland**
**Hans-Sachs-Strasse 44**
**D-8580 Bayreuth (DE)**

(74) Vertreter: **Meyer, Ludgerus**
**Patentanwälte Meyer, Stach, Vonnemann**
**Jungfernstieg 38**
**D-2000 Hamburg 36 (DE)**

Courier Press, Leamington Spa, England.

**Beschreibung**

Die Erfindung betrifft eine Waschanlage zum Reinigen eines endlosen Förderbandes, insbesondere eines Tabakförderbandes, nach dem Oberbegriff des Anspruchs 1.

In einer Cigarettenfabrik werden zum Fördern von Tabak häufig endlose Förderbänder verwendet, die als Flach- oder Muldenbänder ausgelegt sind. Je nach Bearbeitungs- oder Feuchtigkeitsgrad des zu befördernden Tabaks verschmutzen derartige Förderbänder jedoch während eines Produktionstages mehr oder weniger stark. Um die Förderbänder daher von anhaftendem Schmutz oder Tabakteilchen zu reinigen, ist es bekannt, neben Abstreifern Waschanlagen zu verwenden, mit denen das Förderband unter Zuhilfenahme einer Reinigungsflüssigkeit abgewischt oder abgewaschen wird.

Aus der Patentschrift DE—C—29 50 346 ist eine Waschanlage bekannt, bei der ein endloses Waschband verwendet ist, das von einer ersten Walze gegen das umlaufende Förderband gelenkt wird, das Förderband in Gegenrichtung abwischt und dann durch eine untere mit Reinigungsflüssigkeit gefüllte Waschwanne läuft, wobei es anschließend an einer Quetschwalze vorbeiläuft, die überschüssige Waschflüssigkeit aus dem Waschband ausquetscht. Diese bekannte Wascheinrichtung ist relativ aufwendig ausgebildet, denn sie erfordert ein eigenes Waschband, das aufgrund der Gegenläufigkeit mit dem Förderband relativ schnell abnutzt und außerdem wenigstens zwei Umlenkrollen erfordert. Da das Waschband in die Reinigungsflüssigkeit eintaucht, muß diese ein relativ großes Volumen aufweisen, um eine geeignete Wirkung zu erzielen. In vielen Fällen gelingt es mit dieser Anordnung jedoch nicht, das durch das Waschband vom Förderband abgestreifte Material durch einen einfachen Durchlauf durch das Reinigungsbad von dem Waschband abzunehmen. Dadurch bleiben in vielen Fällen Tabakreste vom Förderband an dem Waschband haften, und es ist eine zusätzliche Reinigung des Waschbandes erforderlich. Ein zusätzlicher Nachteil ist darin zu sehen, daß die Reinigungsflüssigkeit häufig erneuert werden muß, um kein erneutes Mittragen von Tabakteilchen über das Waschband auf das Förderband zu bewirken, wodurch die Wirksamkeit dieser Waschanlage bedeutend verringert ist.

Aus der US—A—4,073,376 = DE—A—28 35 472 ist eine Wascheinrichtung gemäß dem Oberbegriff des Anspruchs 1 bekannt, bei der ebenfalls ein Waschband verwendet wird, das jedoch im Gegensatz zum vorgenannten Stand der Technik nicht durch eine Waschflüssigkeit hindurchläuft, sondern unter einem spitzen Winkel mit einem Reinigungsmittel besprüht wird. Dadurch wird nicht nur durch Anfeuchten das Waschband angefeuchtet, sondern es tritt gleichzeitig ein gewisser Reinigungseffekt auf. Diese bekannte Einrichtung weist ferner eine federnd gelagerte Anquetschrolle auf, die gleichzeitig zur Erzeugung der notwendigen Spannung des Waschbandes dient.

Diese Einrichtung ist daher ebenfalls relativ aufwendig.

Der Erfindung liegt die Aufgabe zugrunde, eine Waschanlage zum Reinigen eines endlosen Förderbandes anzugeben, die einfach aufgebaut ist, ein geringes Volumen an Reinigungsflüssigkeit erfordert, geringe Ausmaße aufweist und bei der die Wischvorrichtung in hohem Maße gesäubert wird.

Diese Aufgabe wird durch die im Anspruch 1 angegebene Erfindung gelöst. Vorteilhafte Weiterbildungen der Erfindung sind in Unteransprüchen angegeben.

Die erfindungsgemäße Waschanlage kann räumlich sehr kompakt aufgebaut werden, da zum Reinigen im wesentlichen nur eine Walze erforderlich ist. Diese wird auf ihrer Unterseite über Sprühdüsen mit einer Reinigungsflüssigkeit besprüht, wobei die Düsen gegen die Laufrichtung der Walze angestellt sind, so daß die Walze nicht nur mit der Reinigungsflüssigkeit benetzt, sondern durch den scharfen Strahl der Reinigungsflüssigkeit gleichzeitig ein bedeutender Reinigungseffekt erzielt wird. Die Walze drückt vorzugsweise gegen das frei zwischen zwei Führungsrollen laufende Förderband mit einer gewissen Andruckkraft, die ausreicht, das Förderband nahezu vollständig zu reinigen. Letzte noch an dem Förderband verbleibende Schmutz- oder Tabakteilchen sowie überschüssige Reinigungsflüssigkeit können durch einen nachfolgenden Abstreifer abgeleitet werden, dessen Ablaufkante so angeordnet ist, daß die abgestreifte Flüssigkeit oder die abgestreiften Teilchen in das Gehäuse der Waschanlage zurückgeführt werden.

Um die Menge der dem Förderband zugeführten Reinigungsflüssigkeit zu begrenzen, ist eine Dichtwalze vorgesehen, die mit einer vorbestimmten Andruckkraft auf die Walze drückt und die in dem Oberflächenmaterial der Walze, insbesondere einem filzähnlichen Material, vorhandene überschüssige Reinigungsflüssigkeit abquetscht. Die Dichtwalze ist ferner so angeordnet, daß ein unmittelbares Besprühen des Förderbandes durch die Düsen verhindert ist.

Vorzugsweise kann die Waschanlage mit einer Umwälzeinrichtung versehen sein, wodurch die Menge der benötigten Reinigungsflüssigkeit sehr klein gehalten werden kann.

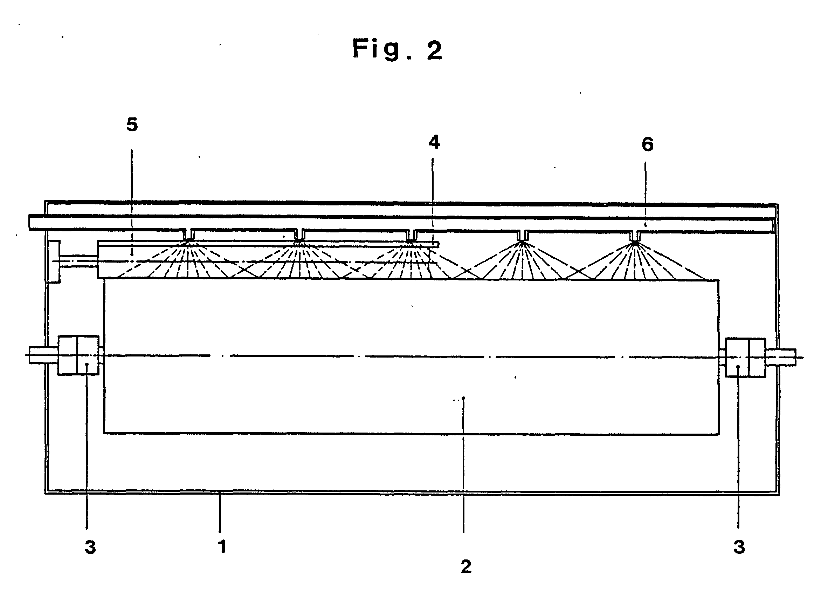

Aus der bereits genannten US—A—4,073,376, die inhaltlich der DE—A—28 35 472 entspricht, geht zwar eine Sprüheinrichtung hervor, die einen Sprühstrahl unter einem spitzen Winkel gegen das Reinigungsband richtet. Wie jedoch insbesondere Fig. 2 zeigt, ist der Sprühstrahl dort nicht *gegen* die Laufrichtung des Bandes gerichtet, sondern in Laufrichtung. Dort wird das Reinigungsband zunächst durch den Sprühstrahl befeuchtet, so daß anhaftende Teilchen danach von dem Band abfallen können. Erst nach einer längeren Strecke, die praktisch der Gesamtbreite der Reinigungsanordnung entspricht, erfolgt ein Abquetschen überflüssiger Flüssigkeit durch die Rolle 68. Der Sinn des Ansprühens des Reinigungsbandes besteht also im wesentlichen darin, das Band zu befeuchten, während bei der Erfindung die Sprühwirkung der Sprühdüsen in erster Linie darin besteht, an der Walze 2 anhaftende Teilchen abzusprühen. Durch die Festlegung der Sprührichtung ist also bei der Erfindung gewährleistet, daß zu entfernende Teilchen durch den Sprühstrahl gegen die Laufrichtung der Walze 2 abgesprüht werden. Beim Gegenstand der Entgegenhaltung ist nicht gewährleistet, daß der Sprühstrahl die zu entfernenden Teilchen absprüht, sonden sie können sogar durch die Sprühwirkung in Laufrichtung auf dem Band einfach versetzt werden.

Der Vorteil der Richtungsbestimmung des Sprühstrahls beim Gegenstand der Erfindung wird noch erhöht, wenn der Sprühstrahl gem. Unteranspruch 4, in Drehrichtung der Reinigungswalze gesehen, hinter dem untersten Punkt er Walze auf diese auftrifft. Ein wesentlicher Teil der zu entfernenden Teilchen wird daher bereits im unteren Bereich der Reinigungswalze durch die Menge der aufgesprühten Flüssigkeit weggewaschen. Der verbleibende Teil wird dann durch den Sprühstrahl abgelöst.

Das vorgenannte Merkmal der Erfindung ist auch nicht aus der DE—OS 20 57 673 entnehmbar. Dort sind Sprühdüsen unmittelbar gegen das Förderband gerichtet und nicht gegen die Reinigungswalze. Ferner sind die Sprühdüsen auch nicht unter einem spitzen Winkel angeordnet. Der Nachteil dieser Anordnung besteht darin, daß auf diese Weise zuviel an Reinigungsflüssigkeit auf das Förderband gerät. Die Einrichtung ist für die Zwecke der Erfindung auch des wegen nicht brauchbar, weil eine Bürstenanordnung die Gefahr mit sich bringt, daß Tabakblätter sich in die Bürste festsetzen können und damit eine zusätzliche Reinigung der Bürste erfordern, wozu jedoch keine Angaben gemacht sind.

Die Erfindung wird nachstehend anhand eines Ausführungsbeispiels erläutert. Es zeigen

Fig. 1 eine Seitenansicht der erfindungsgemäßen Waschanlage,

Fig. 2 eine Draufsicht auf die Waschanlage.

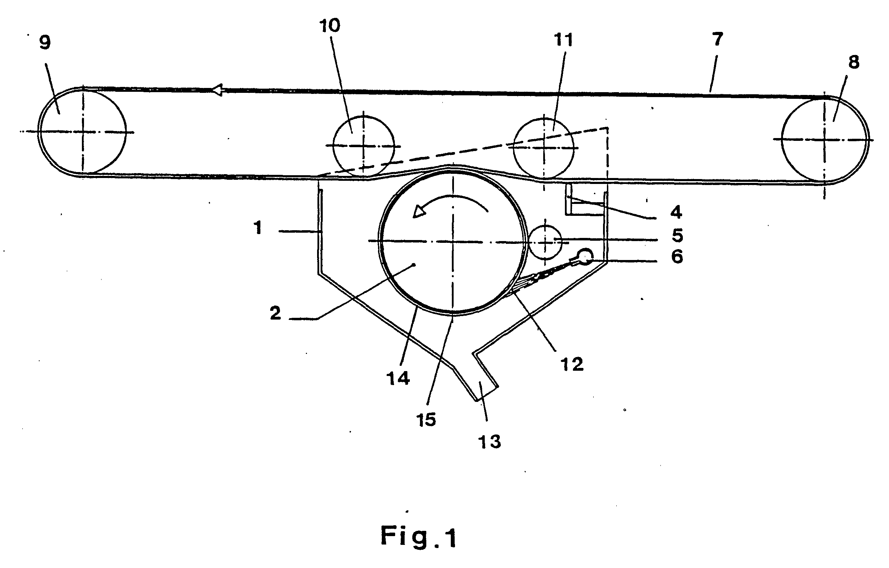

In Fig. 1 ist die erfindungsgemäße Waschanlage im Querschnitt dargestellt. Die Anlage befindet sich unterhalb eines Bandförderers, der als Mulden oder Flachförderer ausgebildet sein kann. Die Anlage kann ständig am Förderband angeordnet sein, vorzugsweise wird sie jedoch über eine Hubeinrichtung nach Beendigung eines Produktionstages an das Förderband herangefahren. Die Waschanlage ist dazu vorzugsweise einseitig am Förderbandgestell angehängt und kann an der anderen Seite über einen pneumatischen oder hydraulischen Hubzylinder soweit abgesenkt werden, daß die Reinigungswalze keine Berührung mehr mit dem Förderband aufweist, bzw. zum Reinigen in die Arbeitsstellung angehoben werden.

Das Gehäuse der Waschanlage ist vorzugsweise trichterförmig ausgebildet, wobei an der Unterseite ein Abfluß zum Ablauf der verschmutzten Reinigungsflüssigkeit vorgesehen ist. Diese kann entweder abgeleitet werden oder sie kann über eine Umwälzeinrichtung mit Filteranlage und Speicherbehälter in die Waschanlage zurückgeführt und wieder über die Düsen eingespritzt werden. Dies erlaubt eine sehr ökonomische Betriebsweise.

Der Kern der Waschanlage besteht aus der Reinigungswalze 2, deren Achse vorzugsweise rechtwinklig zur Laufrichtung des Förderbandes angeordnet ist. Die Reinigungswalze 2 drückt in Arbeitsstellung gegen das zwischen zwei Niederhalterollen 10 und 11 frei geführte Förderband, das im übrigen über wenigstens zwei Umlenkrollen 8 und 9 geführt ist. Die Drehrichtung der Reinigungswalze verläuft gegensinnig zur Laufrichtung des Förderbandes 7. Parallel zur Achse der Reinigungswalze ist innerhalb des Gehäuses 1 ein Düsenstock 6 angeordnet, der mehrere nebeneinander liegende Düsen, vorzugsweise Flachstrahldüsen aufweist, deren Strahlrichtung gegen die untere Oberfläche 14 der Reinigungswalze 2 gerichtet ist. Die Strahlrichtung trifft in einem Bereich 12, gegen die Laufrichtung der Walze angestellt, auf die Trommeloberfläche 14 auf. Der bevorzugte Bereich der Fläche 12 befindet sich in Drehrichtung der Walze gesehen etwa unmittelbar hinter dem unteren Punkt der Walze. Die in diesem Bereich abgesprühten Schmutzteilchen fallen daher unmittelbar nach unten in den trichterförmigen Auslauf 13, ohne daß ein weiteres Entlanglaufen an der Trommeloberfläche bewirkt wird. Der scharfe Strahl des Düsenstocks 6 löst so wirkungsvoll die Schmutzteilchen von der Trommeloberfläche 14 und bewirkt weiterhin, daß diese für den nächsten Waschvorgang entsprechend benetzt ist. Die Oberfläche der Walze ist vorzugsweise mit einem filzähnlichen Material belegt, das insbesondere ein Polyurethan-Gewebe sein kann. Durch die Dichtwalze 5, die im definierten Abstand zur Trommeloberfläche 14 angeordnet ist, kann überschüssige Flüssigkeit abgequetscht werden. Diese Dichtwalze ist ferner so zwischen Düsenstock und Förderband angeordnet, daß der Strahl des Düsenstocks bzw. der Sprühnebel nicht unmittelbar auf das Förderband 7 gelangen kann.

Am Ende der Waschanlage befindet sich vorzugsweise ein quer zum Förderband 7 gerichteter Abstreifer 4, der eventuell nocht vorhandene Restteilchen oder überschüssige Reinigungsflüssigkeit von dem Förderband 7 abstreift und in das Gehäuse 1 der Waschanlage zurückführt. Das Material des Abstreifers besteht vorzugsweise aus Gutasynmaterial.

In Fig. 2 ist die erfindungsgemäße Waschanlage in Draufsicht dargestellt. Die Reinigungswalze 2 und die Dichtwalze 5 werden seitlich durch Schnellwechselkupplungen 3 gelagert. Die Dichtwalze 5, die in der Fig. 2 nur teilweise dargestellt ist, ist seitlich in radial zur Reinigungswalze angeordneten Langlöchern gelagert. Diese erlauben ein definiertes Einstellen des Abstandes und der Andruckkraft der Dichtwalze zur Reinigungswalze. Der Düsenstock 6 ist in Längsrichtung mit einer derartigen Zahl Düsen bestückt, daß die Sprühflächen sich seitlich geringfügig überlappen.

Zum Reinigen der Gehäuseinnenseite, der Kupplungen und der übrigen Teile innerhalb der Waschanlage ist vorzugsweise eine Ringleitung vorgesehen, mit der in zeitlichen Abständen eine Innenreinigung der Waschanlage vorgenommen werden kann.

Zum Antrieb der Reinigungswalze dient ein am Gehäuse 1 befestigter Getriebemotor, der entweder unmittelbar auf die Reinigungswalze wirkt oder den Antrieb durch einen Kettenantrieb durchführt.

An der Fördereinrichtung sind nahezu keine Änderungen erforderlich, außer daß zwei Tragrollen von der Unterseite des Untertrums des Förderbandes 7 auf die obere Seite des Untertrums verlegt werden. Der Untertrum des Förderbandes läuft daher unterhalb der Tragrollen, die die Funktion von Niederhalterollen 10 und 11 übernehmen, zwischen denen die Reinigungsanlage angeordnet ist. Die erfindungsgemäße Waschanlage ist sowohl für gerade als auch ansteigende Förderbänder geeignet. Zum einfachen Austausch der Walzen sind Schnellwechselvorrichtungen vorgesehen. Die Anlage kann einfach montiert werden, sie ist platzsparend, preisgünstig, erlaubt eine automatische Innenreinigung und erfordert nur eine geringe Wartung.

**Patentansprüche**

1. Waschanlage zum Reinigen eines endlosen Förderbandes (7) mit einer in Gegenrichtung zum Förderband (7) angetriebenen Wischvorrichtung mit einer aus einem Flüssigkeit aufnehmenden Material bestehenden Oberfläche, wobei die Wischvorrichtung auf der vom Förderband abgewandten Seite unter spitzem Winkel durch eine Sprüheinrichtung (6) mit einer Reinigungsflüssigkeit besprüht wird und bei der, in Drehrichtung der Wischvorrichtung (2) gesehen, zwischen Sprüheinrichtung (6) und Förderband eine Dichtwalze (5) zum Abnehmen überschüssiger Reinigungsflüssigkeit vorgesehen ist, dadurch gekennzeichnet, daß die Wischrichtung eine gegen das Förderband (7) andrückende Reinigungswalze (2) ist und daß die Sprüheinrichtung (6) entgegen der Laufrichtung der Reinigungswalze (2) gegen deren Oberfläche gerichtet ist.

2. Waschanlage nach Anspruch 1, dadurch gekennzeichnet, daß die Oberfläche (14) der Reinigungswalze mit einem filzähnlichen Material belegt ist.

3. Waschanlage nach Anspruch 2, dadurch gekennzeichnet, daß das Material ein Polyurethan-Gewebe ist.

4. Waschanlage nach Anspruch 1, 2 oder 3, dadurch gekennzeichnet, daß die Sprüheinrichtung (6) Flachstrahldüsen aufweist, deren Sprühstrahl bei horizontal angeordneter Reinigungswalze (2) die Oberfläche der Reinigungswalze in einem Bereich (12) besprüht, der sich in Drehrichtung der Reinigungswalze (2) gesehen hinter dem untersten Punkt (15) der Walze befindet.

5. Waschanlage nach Anspruch 1, dadurch gekennzeichnet, daß die Dichtwalze (5) unter fest eingestellter Andruckkraft gegen die Reinigungswalze (2) drückt.

6. Waschanlage nach einem oder mehreren der vorhergehenden Ansprüche, dadurch gekennzeichnet, daß die Waschanlage gegen das Förderband verlagerbar angeordnet ist und daß die Reinigungswalze (2) in Arbeitsstellung zwischen zwei Niederhalterollen (10, 11) des über zwei Umlenkrollen (8, 9) laufenden Förderbandes (7) an diesem unter vorbestimmter Kraft anliegt.

7. Waschanlage nach den Ansprüche 1 oder 6, dadurch gekennzeichnet, daß in Laufrichtung des Förderbandes im Anschluß an die Waschanlage ein quer zum Förderband verlaufender Abstreifer (4) gegen das Förderband drückt, dessen Ablaufseite derart angeordnet ist, daß abgestreifte Flüssigkeit oder Teilchen in das Gehäuse der Waschanlage ablaufen.

8. Waschanlage nach den Ansprüchen 1, 6 oder 7, dadurch gekennzeichnet, daß das Gehäuse (1) der Waschanlage einen Zufluß und einen Abfluß (13) aufweist, zwischen denen eine Umwälzpumpe, ein Flüssigkeitsbehälter sowie eine Filtereinrichtung vorgesehen sind.

9. Waschanlage nach Anspruch 6, dadurch gekennzeichnet, daß die Niederhalterollen (10, 11) auf der der Andruckseite der Reinigungswalze (2) gegenüberliegenden Seite des Förderbandes (7) angeordnet sind.

10. Waschanlage nach einem oder mehreren der vorhergehenden Ansprüche, dadurch gekennzeichnet, daß das Gehäuse (1) der Waschanlage eine Ringleitung zum Reinigen der Innenwände und Teile der Waschanlage aufweist.

**Revendications**

1. Installation de lavage pour le nettoyage d'une bande transporteuse sans fin (7) comprenant un mécanisme de mouillage, entraîné dans le sens opposé à la bande transporteuse 7) et présentant une surface constituée d'une matière absorbant les liquides, le mécanisme de mouillage étant aspergé au moyen d'un liquide de nettoyage du coté opposé à la bande transporteuse et sous un angle aigu, par un dispositif d'aspersion (6) et, vu dans le sens de rotation du mécanisme de mouillage (6), un rouleau d'étanchéité (5) est prévu entre le dispositif d'aspersion (6) et la bande transporteuse pour éliminer le liquide de nettoyage excédentaire, caractérisée en ce que le mécanisme de mouillage est un cylindre de nettoyage (2) exerçant une pression contre la bande transporteuse (7) et que le dispositif d'aspersion (6) est orienté dans le sens opposé au sens de rotation du cylindre de nettoyage (2), vers la surface de celui-ci.

2. Installation de lavage suivant la revendication 1, caractérisée en ce que la surface (14) du cylindre de nettoyage est recouverte d'une matière analogue au feutre.

3. Installation de lavage suivant la revendication 2, caractérisée en ce que la matière est un tissue en polyuréthanne.

4. Installation de lavage suivant la revendication 1, 2 ou 3, caractérisée en ce que le dispositif d'aspersion (6) comporte des ajutages à jet plat dont le jet d'aspersion, lorsque le cylindre de nettoyage (2) est disposé horizontalement, asperge la surface du cylindre de nettoyage dans une zone (12), qui, vu dans le sens de rotation du cylindre de nettoyage (2), se trouve derrière le point le plus bas (15) du cylindre.

5. Installation de lavage suivant la revendication 1, caractérisé en ce que le rouleau d'étanchéité (5) est pressé contre le cylindre de nettoyage (2) sous une force de pression réglée de manière fixe.

6. Installation de lavage suivant une ou plusieurs des revendications précédentes, caractérisée en ce qu'elle est montée déplaçable vers la bande transporteuse et que le cylindre de lavage (2), en position de travail, est appliqué contre cette bande transporteuse sous une force prédéterminée, entre deux rouleaux presseurs (10, 11) de cette bande transporteuse (7) qui passe sur deux rouleaux de renvoi (8, 9).

7. Installation de lavage suivant la revendication 1 ou 6, caractérisée en ce que, dans le sens de défilement de la bande transporteuse, l'installation de lavage est suivie d'une racle (4) transversale à la bande transporteuse, qui exerce une pression contre cette bande transporteuse et dont le côté aval est disposé d'une manière telle que le liquide ou les particules raclées s'écoulent dans le boîtier de l'installation de lavage.

8. Installation de lavage suivant la revendication 1, 6 ou 7, caractérisée en ce que son boîtier (1) présente une alimentation et une évacuation (13), entre lesquelles sont prévus une pompe de circulation, un réservoir de liquide et un dispositif de filtrage.

9. Installation de lavage suivant la revendication 6, caractérisée en ce que les rouleaux presseurs (10, 11) sont disposés du côté de la bande transporteuse (7) opposée au côté de pression du cylindre de nettoyage (2).

10. Installation de lavage suivant une ou plusieurs des revendications précédentes, caractérisée en ce que son boîtier (1) comporte une rampe circulaire pour le nettoyage de ses parois internes et de ses éléments.

**Claims**

1. Washing unit for cleaning an endless conveyor belt (7) with a wiping device driven in the opposite direction to the conveyor belt (7) with a surface comprising a liquid-absorbing material, the wiping device being sprayed with a cleaning liquid, at an acute angle on the side facing away from the conveyor belt, by a spraying apparatus (6), and in which, as seen in the direction of rotation of the wiping device (2), a sealing roll (5) is provided between spraying apparatus (6) and conveyor belt to remove surplus cleaning liquid, characterized in that the wiping device is a cleaning roller (2) pressing against the conveyor belt (7) and that the spraying apparatus (6) is directed against the direction of travel of the cleaning roller (2).

2. Washing unit as in Claim 1, characterized in that the surface (14) of the cleaning roller is coated with a felt-like material.

3. Washing unit as in Claim 2, characterized in that the material is a polyurethane fabric.

4. Washing unit as in Claim 1, 2 or 3, characterized in that the spraying apparatus (6) has flat-jet nozzles whose spray jet, when the cleaning roller (2) is horizontally arranged, sprays the surface of the cleaning roller in an area (12) located, as seen in the direction of rotation of the cleaning roller (2), behind the lowest point (15) of the roller.

5. Washing unit as in Claim 1, characterized in that the sealing roller (5) presses against the cleaning roller (2) under a fixed pressure force.

6. Washing unit as in one or more of the previous claims, characterized in that the washing unit is displaceably arranged against the conveyor belt and that, in the working position between two holding-down rollers (10, 11) of the conveyor belt (7) running over two guide rollers (8, 9), the cleaning roller (2) lies against the conveyor belt under a predetermined force.

7. Washing unit as in Claims 1 or 6, characterized in that, in the direction of travel of the conveyor belt, adjacent to the washing unit, a scraper (4) running transversely to the conveyor belt presses against the conveyor belt, its run-off side being so arranged that scraped-off liquid or particles run off into the housing of the washing unit.

8. Washing unit as in Claims 1, 6 or 7 characterized in that the housing (1) of the washing unit has an inlet and an outlet (13) between which a circulating pump, a liquid container and a filter apparatus are provided.

9. Washing unit as in Claim 6, characterized in that the holding-down rollers (10, 11) are arranged on the side of the conveyor belt (7) lying opposite the pressure side of the cleaning roller (2).

10. Washing unit as in one or more of the preceding claims, characterized in that the housing (1) of the washing unit has a closed-circuit line for cleaning the inside walls and parts of the washing unit.

Fig.1

EP 0 266 627 B1

# Fig. 2